(19) Europäisches Patentamt

European Patent Office

Office européen des brevets

(11) **EP 1 070 397 B1**

(12) **EUROPEAN PATENT SPECIFICATION**

(45) Date of publication and mention
of the grant of the patent:
**27.09.2006 Bulletin 2006/39**

(51) Int Cl.:
*H04B 7/26* (2006.01)          *H04L 12/56* (2006.01)
*H04Q 7/38* (2006.01)

(21) Application number: **99914862.0**

(22) Date of filing: **25.03.1999**

(86) International application number:
**PCT/SE1999/000476**

(87) International publication number:
**WO 1999/049598 (30.09.1999 Gazette 1999/39)**

(54) **Method to reallocate the traffic load ina cellular mobile telephone system**

Verfharen zur ewiederzuordnung der Verkehrslast in einem drahtlosen mobilen zellularen Telefonsystem

Procédé de réaffectation de la chargé de trafic dans un système téléphonique mobile cellulaire

(84) Designated Contracting States:
**CH DE DK ES FI FR GB IT LI NL SE**
Designated Extension States:
**LT LV**

(30) Priority: **26.03.1998 SE 9801027**

(43) Date of publication of application:
**24.01.2001 Bulletin 2001/04**

(73) Proprietor: **Telia AB (publ)**
**123 86 Farsta (SE)**

(72) Inventors:
• **ANDERSIN, Mikael**
**S-118 64 Stockholm (SE)**
• **AYOUB, Souhad**
**S-141 55 Huddinge (SE)**

(74) Representative: **Hopfgarten, Nils et al**
**L.A. Groth & Co. KB**
**P.O. Box 6107**
**102 32 Stockholm (SE)**

(56) References cited:
**EP-A1- 0 622 925          EP-A2- 0 637 895**
**EP-A2- 0 708 573          WO-A2-98/05175**
**GB-A- 2 296 844**

## Description

### TECHNICAL FIELD

The present invention relates to a procedure at a cellular mobile telephone system for reallocating traffic load, from on cell, to another, at packet switched connections according to the preamble of claim 1.

### PRIOR ART

General Packet Radio Service (GPRS) is a new service for GSM which makes possible packet switched services.

GPRS is a very cost efficient method in the sense that a GPRS mobile utilises the radio channel only when it shall transmit or receive data. GPRS uses to a large extent the same radio network infrastructure (BSS) as GSM and HSCSD. Circuit and packet switched services will therefore to some extent share the same radio resource, which may result in great problems. "Burst-based" data sources which during short periods require high data rates (for instance WWW, file transfer) will call for high demands on the system. Previous investigations have shown that a small number of data users can cause a very high congestion for speech users in a system where speech and data users coexist.

### TECHNICAL PROBLEM

An aim of the present invention therefore is to effect a procedure which gives a high throughput of data in the cellular network. The previously known technology of cell re-selection has focussed on speech traffic and only considered the propagation conditions in the network. Thus in WO 98 05175 a method is described of freeing upon request a voice channel in a congested first cell in a cellular radio telecommunications system. A second cell is then identified that neighbours the congested cell, and a mobile station operating on a voice channel in the congested cell near the boundary of the second cell is identified. A handoff of the mobile station is then forced from the congested cell to the second cell for freeing the voice channel. The method is repeated for a third cell if necessary. By the introduction of GPRS more and more situations will occur where different users need different quantities of resources and then it must also be considered what the resource situation in the network looks like. The present invention with belonging algorithm does just this (in combination with the propagation conditions), and the invention results in that the data rate for GPRS-mobiles can increase as a consequence of a better channel utilisation (truncing loss will decrease).

A trivial method to increase the throughput of data in GPRS is to make the connections (base station - mobile pair) use several time slots within a frame. This is only possibly to a certain level, namely until all time slots are occupied in a base station. Even when this situation arises in the network, it will be possible to increase the total transmission capacity of the system.

The networks of today are designed for "worst-case" situations where, for instance, the frequency allocation must be based on the quality demand of a smallest C/I-value of 9 dB at the cell edge. Further, the number of frequency bands (where each frequency band corresponds to eight time slots) which are allocated to the different base stations must consider the worst case (the traffic peaks) of the load of the system). This results in a less efficient utilisation of spectrum during "non-busy"-periods.

### TECHNICAL SOLUTION

The technical solution is obtained by a procedure as specified in claim 1.

### ADVANTAGES

By the present invention it will be easier to reroute mobiles to effect a higher security at the transmission, and a higher transmission capacity in the network. Further, the procedure is so general that it can be applied to other cellular packet-oriented systems which have similar requirements as GPRS (for instance UMTS). It should be observed that cell re-selection is a functionality which the network (i.e. indirectly the operator) decides whether it shall take place.

Another advantage which the invention provides is that the throughput of data in the system is not obtained as a consequence of an impaired communication to users who already have their service running.

### DESCRIPTION OF FIGURES

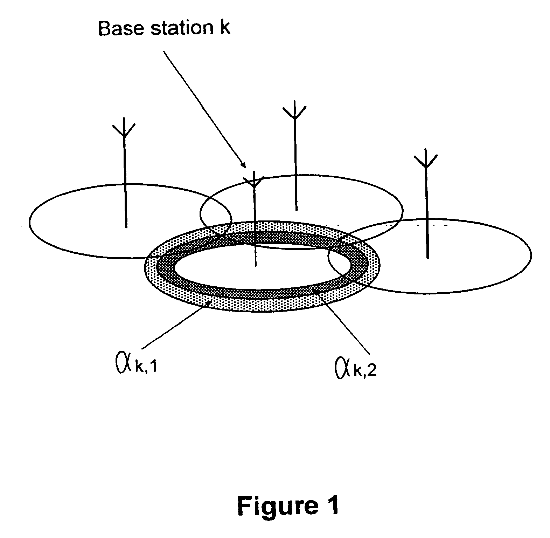

Figure 1 shows a schematic figure which describes the area around a base station where candidates are tried to be found for cell re-selection.

### DETAILED DESCRIPTION

In Figure 1 a picture shows how a part of the algorithm which is an integral part of the procedure works, and describes the area around a base station k where one tries to find candidates for cell re-selection. One first investigates the area which is defined by the parameter $\alpha_{k,1}$ (light shaded area). If there are no mobiles, one may search further into the cell specified by the parameter $\alpha_{k,2}$ (dark shaded area) etc. This is described in detail later in the text.

The traffic in a cellular mobile telephone system is such that the cells utilise only a part of their total capacity. When the traffic varies, both in time and room, the load between different base stations will fluctuate. It may be that a base station has all its time slots and frequencies allocated to mobile users in its cell, whereas adjacent base stations to this cell are less loaded. Then it is possible to utilise the free capacity in the adjacent base stations to increase the total throughput of data in the system by connecting some mobiles in the heavily loaded base station to these.

According to the specification for GPRS (GSM 03.64 Version 2.02 April 1997), it is the mobile that decides when it is time to make a "cell re-selection", i.e. change of cell by connecting to another base station. The network, however, has means of giving order the mobile to make a "cell re-selection" to one by the network specified cell.

The invention is based on the use of this network controlled "cell re-selection" to reroute mobiles to cells which are less loaded. The invention utilises already existing measurement methods in the mobiles to find out the propagation conditions in the surrounding cells (base stations).

The algorithm which is utilised is based on a classification of the mobiles based on their "distances" from their respective base station. By "distance" here is referred to the value of the attenuation in the radio links to the different base stations. If a mobile has a high attenuation to its present base station (cell), and has a comparatively small attenuation to adjacent cells, this mobile will be a suitable candidate to be selected for cell reselection.

In the following is presented a detailed description of the algorithm which we utilise, and after that the different steps in the algorithm are explained. When we in the definition of the algorithm talk about mobiles, we refer to mobiles which have GPRS-functionality (can also be in combination with GSM and/or HSCSD).

The algorithm can be used both at establishing of sessions (data calls) and when sessions are in progress. The algorithm can be used in situations where when one or more mobiles in the network want to use more channels than are available in the base station. The algorithm makes use of thresholds to identify areas around the base stations where candidates for cell reselection shall be found out. Let the total number of base stations in the network be N. One starts by examining mobiles far away from their respective base stations. The first area for base station j is specified (as below) by a parameter $\alpha_{j,1}$. If the algorithm has not found a mobile in this first area, areas closer and closer to the base station will be examined. This procedure is performed step by step for all base stations. The areas are specified by the parameters $\alpha_{j,m}$, where the parameters fulfils the following relation $\alpha_{j,1} > \alpha_{j,2} > \alpha_{j,3} ..... > \alpha_{j,Kj}$ (j=1,...,N). The number of parameters for respective base station (Kj, j=1,......,N) and the individual values of the parameters are defined by the operator.

    1) The algorithm goes through a loop (step 2-8 below) and makes during the first turn use of the parameters $\alpha_{j,1}$, (j=1,...,N), during the second turn of

the parameters $\alpha_{j,2}$, etc.

2) Each mobile measures the signal strength to the neighbouring base stations and the own cell. This can in our algorithm be implemented in different ways. Either one can use RXLEV which the mobile reports to the base station on a regular basis, or one can use a function of this, for instance average RXLEV during a certain defined time interval. As an alternative one can use the C1-criterion according to the GSM-specification (4). Also other measured values based on signal strength can be used. Let $G_{i,j}$ be the measured signal strength value (obtained according to some method) between the base station j and mobile i. For each mobile we now form the difference $D_{ij}$, between the measured value towards the base station the mobile at present is connected to (serving cell, say that it has index k) $G_{ik,}$ and the adjacent base stations according to the channel list for the adjacent channels.
Consequently we will have:

$$D_{ij} = G_{ij} - G_{ik} \qquad j \neq k \quad (dB)$$

for all j which belongs to the channel list for adjacent channels for base station k- This, consequently, is the difference in propagation conditions for mobile i.

3) All mobiles which have at least one adjacent base station with index $\alpha$ with $D_{ij}$ larger than $\alpha_{k,1}$ constitute candidates for cell re-selection and are part of the number of candidates S. The relation $D_{ij} > \alpha_{k,1}$ will describe an area between the base stations (which in reality is highly irregular) where the algorithm will search for mobiles which are suitable for cell reselection. An illustration of this is in Figure 1. It is a very schematic figure which describes the "area" around a base station where one tries to find candidates for cell re-selection. First that area is inspected which is defined by the parameter $\alpha_{k,1}$ (light grey area). If there are no mobiles there, one may examine further into the cell specified by the parameter $\alpha_{k,2}$ (dark grey area), etc.

4) For each mobile of the number S, one inspects for each base station, which together with the mobile fulfils the condition $D_{ij} > \alpha_{k,1}$ how many channels x the mobile can have allocated to itself, provided that x is less than or equal to a maximum number which is the number that the mobile wishes, in the potentially new base station. In addition one inspects how many channels y, that can be allocated to other mobiles in the base station to which the mobile in question for the time being is connected (serving cell), given that the mobile makes a cell re-selection to the candidate base station which is regarded. These two are summed up (x+y) and one will have the total number of channels which can be allocated in the network, given that the mobile is connected towards the new base station, i.e. we study the increase of the total data throughput. This is made for all mobiles in the number of candidates S. These constitute the subset S1. With each mobile in the subset S1 is associated the base station which together with the mobile gives maximal increase of throughput.

5) If there in step 4 would be mobiles which have several candidate base stations which give maximal increase of throughput, one selects for respective mobile the candidate base station which has the highest $D_{ij}$, i.e. the one with the strongest reception.

6) If there are more than one mobile in the number of S1 after step 5, it is a question of finding a final mobile from the number S1. This is made in the following way:
**Power control is not used:**
The mobile of the number S1 is selected for cell re-selection which has the smallest value $G_{ik}$ in the present cell (serving cell).
**Power control is used:**
The mobile of the number S1 which has the smallest value of ($P_{j,new}$ - $D_{ij}$) is selected. $P_{j,new}$ is the receiver power which the base station j orders the mobiles (which are connected towards base station j) to adjust to.

7) The network orders the selected mobile to make cell reselection to the appointed base station. Then the network checks that other radio connections are not too much interfered with.

8) If there would be no mobiles which do not fulfil the condition $D_{ij} > \alpha_{k,1}$ towards any base station, there are no candidates in the area for cell re-selection. This implies that the mobiles in the heavily loaded cells are closer to their base stations than the cell re-selection thresholds $\alpha_{j,1}$ (j=1, ... ,N) specifies. Then one may try the parameters $\alpha_{j,2}$ (j=1, ....N) and start again from step 2, i.e. one moves gradually closer and closer to the base stations and examines possible candidates.

9) If the cell which the mobile actually preferably would be connected to, e.g. because of a maximum signal strength between the mobile and base station of this cell, again get vacant time slots, then the mobile which has been ordered to make a cell re-selection again can be connected to this preferred cell.

The algorithm is specified to have one mobile at a time selected for cell re-selection. Of course it is possible to speed up the procedure by making multiple selections of mobiles (several are selected at the same time). As a suggestion the calculations as above then are made parallel for a plurality (or the number which one wants to take away) mobiles and lists the mobiles in order according to step 2-8.

An explanation of the different steps in the algorithm is given in the following.

1) No explanation necessary.

2) Explained together with step 3 below.

3) The idea is, as has been mentioned, to select the mobiles which, from a propagation point of view are far from the present base station. Note that we will not make a cell re-selection if there are no mobile that fulfils the condition in the last round (i.e. for the parameters $\alpha_{j,Kj}$) even if the system would be "filled up". This is due to the fact that if such a situation should occur, the mobiles are too close to the present base station (serving cell), and to connect them to a base station too far away requires very high transmission power, which the mobiles may not be able to effect. The number of parameters Kj (j =1, ... , N) for respective base station (i.e. the largest area which is regarded for cell re-selection) will be decided by a trade-off between capacity demands and quality demands in the network.

4) This selection is made in order to get as high a data throughput as possible. Note that the algorithm is specified to select only one mobile at a time. If one has a situation where a plurality of mobiles need to make cell re-selection, the cell re-selection for the mobiles will be made in sequence (one at a time). One can of course examine all combinations of mobiles in the network which gives maximal increase of throughput. This actually is an optimal strategy. The problem is that the complexity of such an algorithm will increase exponentially by the number of mobiles which need to make cell re-selection. For practical realisations we suggest that a sup-optimal sequential strategy is used. In the cases when one only needs to make cell re-selection for one mobile, the sequential method of course is optimal.

5) If a mobile has a plurality of base stations to select from (with the same increase of throughput), one selects the one for which the wave propagation conditions are best.

6) If there are a plurality of mobiles which constitute candidates in step 5, one selects strategy depending on if one has power control switched on or not. In the case without power control, one selects the mobile which has the worst propagation conditions to the present base station (serving cell), and which consequently will interfere least when it has been switched over to the new base station. In the case when one has power control, one selects the mobile which gives least interference power in the previous serving cell when one has switched over the mobile to the new base station.

7) We deal with point 7 below.

8) This point is self-explaining.

9) As a result of an ordered cell reselection the mobile is connected to a cell to which it has not best, but sufficiently good propagation conditions. If time slots become vacant in the "best" base station for the mobile, one should switch back the mobile to this base station to reduce the need of transmitted power from the mobile.

**Interference towards other links**

The algorithm is aggressive in so far as it tries to increase the throughput of data in the system towards a potential increase of the interference in the network. Problems of course can arise if too much interference is created in other connections so that their communications quality falls below an acceptable level. Then the network has to do something to solve this problem. We will discuss this for two frequent cases:

*Fixed frequency allocation:*

Fixed frequency allocation exists in the GSM-systems of today. This means that the base stations are permanently allocated a number of frequency bands which can be used for communication with the mobiles in the belonging cell. There also is possibility to hop on these frequencies (base band hop). The allocation of frequencies is planned so that adjacent cells (base stations) do not use the same frequencies, and that two cells which have been allocated the same frequency are sufficiently far from each other. This results in that, in the case with fixed frequency allocation, the problematic situation above will not occur. A mobile which is switched over to a base station according to the algorithm does not interfere with any other connection to any great extent (the system is so designed) but may risk that the own connection will have too poor communication quality. Consequently it is in principle only the connection which makes the cell re-selection that can be afflicted.

*Synthesis hopping with small repetition distances:*

In a near future synthesis hopping can be used in the system and then it will be of interest to hop over the whole bandwidth which an operator has been allocated. There of course are implementation aspects which limits to what extent this can be done, but the idea itself is that (in addition to frequency diversity) effect interference diversity in the system and at the same time reduce the size of the cluster. This may result in a considerably better utilisation of the expensive radio resource. The consequences for the algorithm above is that one cannot guarantee that users in two adjacent cells do not use the same frequency during all time slots, i.e. there may in this case arise situations when a cell re-selection connection can interfere with other radio connections in the network. Regarding frequency hopping, and especially synthesis hopping, there are problems of identifying which transmitter/receiver-pair that are interfering in the network. This is a general problem and is not specific to our algorithm. We suggest that the problem (and point 7 in the algorithm above) in this case is solved in the following way:

Because we are studying a GPRS-system which transports principally non-real time services, we have a re-transmission protocol which requests re-transmissions if the packets are received with too many errors (the communication quality is too poor). If the now switched over mobile would cause problems, this will be observed by that the number of re-transmissions for mobiles in adjacent cells and mobiles in the old cell is increased. If there would occur a heavily increased number of re-transmissions, this is a sure symptom of that the performed cell reselection would not have taken place. One then can chose to regard the cell re-selection action as a failed attempt and order the cell where the transferred mobile is to stop the transmission. Or one can chose to let the transmission go on at the price of a deteriorated quality for the specific mobiles which are negatively influenced by the interference. The latter usually is called "graceful degradation". The invention is of course not limited to the above specified embodiment, but may be subject to modifications within the frame of the idea of the invention illustrated in the following patent claims.

**Claims**

1. Procedure at a cellular mobile telephone system for reallocating traffic load on packet switched connections from one cell to another, said system comprising mobiles having GPRS-functionality an base stations, wherein a network controlled cell reselection algorithm, applied both at set-up of data calls and during data call sessions in progress, orders a mobile to make a cell reselection, **characterized in that** in GPRS one connection can utilise several time slots within the same time frame, and the network controlled cell reselection algorithm comprises the following steps,

> - each mobile measures the signal strength of adjacent base stations and in its own cell,
> - all mobiles which have at least one adjacent base station with $D_{ij} > \alpha_{k,1}$ are searched for as candidate for cell reselection, $D_{ij}$ denoting the

difference between the measured signal strengths towards adjacent base stations and towards the base station to which a mobile at present is connected to and $\alpha_{k,1}$ denoting a parameter specifying a first area for the base station to which a mobile at present is connected to, i is an index denoting mobiles, j an index denoting adjacent base stations and k an index denoting the base station to which a considered mobile at present is connected to,

- for each such candidate mobile and each adjacent base station, for which the condition $D_{ij} > \alpha_{k,1}$ is fulfilled, the number of channels which can be allocated to the candidate mobile and the number of channels which can be allocated to other mobiles in the base station to which the candidate mobile is presently connected to are determined,

- these two numbers of channels are summed to determine the increase of total data throughput,

- each candidate mobile is then associated with that adjacent base station which gives a maximum increase of total data throughput,

- if there are more than one candidate mobiles, a selection of the candidate mobiles depends on whether power control is applied or not; if power control is not applied, a candidate mobile with the worst propagation condition to the base station to which the candidate mobile is presently connected to is selected; if power control is applied, a candidate mobile with the least interference to the base station to which the candidate mobile is presently connected to when the candidate mobile is reallocated to the associated adjacent base station is selected,

- the selected mobile is ordered to make a cell reselection to the associated adjacent base station,

- if no mobiles fulfil said condition $D_{ij} > \alpha_{k,1}$ towards any adjacent base station, the above steps are repeated for mobiles in a second area, situated closer to the base station to which the considered mobiles are connected to and specified by a parameter $\alpha_{k,2}$.

2. Procedure according to claim 1, **characterized in that** the procedure utilises threshold values to identify areas around base stations where candidates for cell selections are searched.

3. Procedure according to claim 1, **characterized in that** the procedure utilises existing measuring methods in the mobiles to determine propagation conditions to the adjacent base stations.

4. Procedure according to claim 1, **characterized in that** $\alpha_{k,1}$, $\alpha_{k,2}$ are based on a classification of the mobiles according to the attenuations in radio links to different base stations, wherein a mobile having a higher attenuation to its present base station and a comparatively lower attenuation towards adjacent base stations, is identified as candidate mobile for cell reselection.

5. Procedure according to claim 4, **characterized in that** the procedure can be used to select one mobile at a time for cell reselection, or to select a plurality of mobiles at a time for cell reselection.

6. Procedure according to any one of the preceding claims, **characterized in that**, if more than one adjacent base station provide the maximum throughput increase, each candidate mobile is then associated with the adjacent base station having the highest Dij.

## Patentansprüche

1. Verfahren bei einem zellularen Mobiltelefonsystem zum erneuten Zuteilen von Verkehrslast auf paketvermittelten Verbindungen von einer Zelle zu einer anderen, welches System Mobilgeräte, die GPRS-Funktionalität haben, und Basisstationen aufweist, wobei ein netzgesteuerter Algorithmus zur erneuten Auswahl von Zellen, der sowohl bei der Einrichtung von Datenrufen als auch während laufender Datenrufsitzungen angewendet wird, ein Mobilgerät anweist, eine erneute Auswahl einer Zelle vorzunehmen, **dadurch gekennzeichnet, dass** in GPRS eine Verbindung mehrere Zeitschlitze innerhalb desselben Zeitdatenblocks verwenden kann und der netzgesteuerte Algorithmus zur erneuten Auswahl die folgenden Schritte aufweist,

- jedes Mobilgerät misst die Signalstärke benachbarter Basisstationen und in seiner eigenen Zelle,
- alle Mobilgeräte, die wenigstens eine benachbarte Basisstation mit $D_{ij} > \alpha_{k,1}$ haben, werden als Kandidat für erneute Auswahl von Zellen durchsucht, wobei $D_{ij}$ den Unterschied zwischen den gemessenen Signalstärken zu benachbarten Basisstationen und zu der Basisstation bezeichnet, mit der ein Mobilgerät gegenwärtig verbunden ist, und $\alpha_{k,1}$ einen Parameter bezeichnet, der ein erstes Gebiet für die Basisstation angibt, mit der ein Mobilgerät gegenwärtig verbunden ist, i ein Index ist, der Mobilgeräte bezeichnet, j ein Index ist, der benachbarte Basisstationen bezeichnet und k ein Index ist, der die Basisstation bezeichnet, mit der ein betrachtetes Mobilgerät gegenwärtig verbunden ist,
- für jedes solche Kandidatenmobilgerät und jede benachbarte Basisstation, für die die Bedingung $D_{ij} > \alpha_{k,1}$ erfüllt ist, werden die Anzahl von Kanälen, die dem Kandidatenmobilgerät zugeteilt werden können, und die Anzahl von Kanälen bestimmt, die anderen Mobilgeräten in der Basisstation zugeteilt werden kann, mit der das Kandidatenmobilgerät gegenwärtig verbunden ist,

- diese beiden Anzahlen von Kanälen werden summiert, um das Anwachsen des gesamten Datendurchgangs zu bestimmen,

- jedes Kandidatenmobilgerät wird dann mit der benachbarten Basisstation verknüpft, die eine maximale Erhöhung des gesamten Datendurchflusses ergibt,

- wenn es mehr als ein Kandidatenmobilgerät gibt, hängt die Auswahl der Kandidatenmobilgeräte davon ab, ob Leistungssteuerung angewendet wird oder nicht; wenn Leistungssteuerung nicht angewendet wird, wird ein Kandidatenmobilgerät mit der schlechtesten Fortpflanzungsbedingung zur Basisstation ausgewählt mit der das Kandidatenmobilgerät gegenwärtig verbunden ist; wenn Leistungssteuerung angewendet wird, wird ein Kandidatenmobilgerät mit der geringsten Störung zur Basisstation ausgewählt, mit der das Kandidatenmobilgerät gegenwärtig verbunden ist, wenn das Kandidatenmobilgerät erneut der verknüpften benachbarten Basisstation zugeteilt wird,

- das ausgewählte Mobilgerät wird angewiesen, eine erneute Zellenauswahl zur verknüpften benachbarten Basisstation zu machen,

- wenn kein Mobilgerät die Bedingung $D_{ij} > \alpha_{k,1}$ zu irgendeiner benachbarten Basisstation erfüllt, werden die obigen Stritte für Mobilgeräte in einem zweiten Gebiet wiederholt, dass der Basisstation näher ist, mit denen die in Betracht gezogenen Mobilgeräte verbunden sind und durch einen Parameter ($\alpha_{k,2}$ angegeben sind.

**2.** Verfahren nach Anspruch 1, **dadurch gekennzeichnet, dass** das Verfahren Schwellwerte verwendet, um Bereiche um Basisstationen zu identifizieren, wo Kandidaten für Zellauswahlen gesucht werden.

**3.** Verfahren nach Anspruch 1, **dadurch gekennzeichnet, dass** das Verfahren existierende Messverfahren in den Mobilgeräten verwendet, um Fortpflanzungsbedingungen zu den benachbarten Basisstationen zu bestimmen.

**4.** Verfahren nach Anspruch 1, **dadurch gekennzeichnet, dass** $\alpha_{k,1}$, $\alpha_{k,2}$ auf einer Klassifikation von Mobilgeräten entsprechend den Abschwächungen in Funkverbindungen zu unterschiedlichen Basisstationen beruhen, wobei ein Mobilgerät mit einer größeren Abschwächung zu seiner gegenwärtigen Basisstation und einer verhältnismäßig geringeren Abschwächung zu benachbarten Basisstationen als Kandidatenmobilgerät für erneute Zellenauswahl identifiziert wird.

**5.** Verfahren nach Anspruch 4, **dadurch gekennzeichnet**e dass das Verfahren verwendet werden kann, um ein Mobilgerät zur Zeit für erneute Zellenauswahl auszuwählen, oder um eine Mehrzahl von Mobilgeräten gleichzeitig für erneute Zellenauswahl auszuwählen.

**6.** Verfahren nach einem der vorangehenden Ansprüche, **dadurch gekennzeichnet, dass**, wenn mehr als eine benachbarte Basisstation die größte Erhöhung des Durchflusses liefert, jedes Kandidatenmobilgerät dann mit der benachbarten Basisstation verknüpft wird, die das höchste $D_{ij}$ hat.

**Revendications**

**1.** Procédure appliquée à un système de téléphone portable cellulaire servant à réaffecter la charge de trafic sur des connexions par commutation de paquet d'une cellule à une autre, ledit système comprenant des portables ayant une fonctionnalité GPRS et des stations de base, dans lesquelles un algorithme de resélection de cellule contrôlé par réseau, appliqué à l'établissement de communications de données et pendant les sessions de communication de données en cours, donne l'ordre à un portable de faire une resélection de cellule, **caractérisé en ce qu'**en GPRS une connexion peut utiliser plusieurs intervalles de temps dans le même créneau de temps, et l'algorithme de resélection de cellule contrôlé par réseau comprend les étapes suivantes,

- chaque portable mesure l'intensité du signal des stations de base adjacentes et dans sa propre cellule,

- tous les portables qui ont au moins une station de base adjacente avec $D_{ij} > \alpha_{k,1}$ sont recherchés comme candidat pour la resélection de cellule, $D_{ij}$ désignant la différence entre les intensités du signal mesuré vers les stations de base adjacentes et vers la station de base à laquelle un portable est connecté à ce moment-là et $\alpha_{k,1}$ désignant un paramètre spécifiant une première zone pour la station de base à laquelle un portable est connecté à ce moment-là, i est un index désignant les portables, j un index désignant les stations de base adjacentes et k un index désignant la station de base à laquelle un portable donné est connecté à ce moment-là,

- pour chaque tel portable candidat et chaque station de base adjacente, pour laquelle la condition $D_{ij} > \alpha_{k,1}$ est remplie, le nombre de canaux qui peut être affecté au portable candidat et le nombre de canaux qui peut être affecté à d'autres portables dans la station de base à laquelle le portable candidat est connecté actuellement sont déterminés,

- ces deux nombres de canaux sont calculés pour déterminer l'augmentation de débit de données total,

- chaque portable candidat est ensuite associé avec cette station de base adjacente qui donne une augmentation maximum du débit de données total,

- si il y a plus d'un portable candidat, une sélection des portables candidats dépend de l'application ou non de la régulation d'alimentation ; si la régulation d'alimentation ne s'applique pas, un portable candidat avec la pire condition de propagation à la station de base à laquelle le portable candidat est connecté actuellement est sélectionné; si la régulation d'alimentation s'applique, un portable candidat avec le moins d'interférence à la station de base à laquelle le portable candidat est connecté actuellement quand le portable candidat est réaffecté à la station de base adjacente associée est sélectionné,

- l'ordre est donné au portable sélectionné de faire une resélection de cellule à la station de base adjacente associée,

- si aucun portable ne remplit ladite condition $D_{ij} > \alpha_{k,1}$ vers une station de base adjacente, les étapes ci-dessus sont répétées pour les portables dans une seconde zone, située plus près de la station de base à laquelle les portables donnés sont connectés et spécifiés par un paramètre $\alpha_{k,2}$.

2. Procédure selon la revendication 1, **caractérisée en ce que** la procédure utilise des valeurs de seuil pour identifier des zones autour des stations de base où les candidats pour les sélections de cellule sont recherchés.

3. Procédure selon la revendication 1, **caractérisée en ce que** la procédure utilise des procédés de mesure existants dans les portables pour déterminer les conditions de propagation aux stations de base adjacentes.

4. Procédure selon la revendication 1, **caractérisée en ce que** $\alpha_{k,1}$, $\alpha_{k,2}$ sont basés sur une classification des portables selon les atténuations dans les interfaces radio aux différentes stations de base, dans laquelle un portable ayant une atténuation plus haute à sa station de base actuelle et une atténuation comparativement plus basse vers les stations de base adjacentes, est identifié comme portable candidat pour la resélection de cellule.

5. Procédure selon la revendication 4, **caractérisée en ce que** la procédure peut être utilisée pour sélectionner un portable à la fois pour la resélection de cellule, ou pour sélectionner une pluralité de portables à la fois pour la resélection de cellule.

6. Procédure selon l'une quelconque des revendications précédentes, **caractérisée en ce que**, si plus d'une station de base adjacente fournit l'augmentation de débit maximum, chaque portable candidat est ensuite associé à la station de base adjacente ayant le Dij le plus haut.

Base station k

$\alpha_{k,1}$          $\alpha_{k,2}$

# Figure 1